# EUROPEAN PATENT APPLICATION

(11) **EP 4 415 189 A1**
(43) Date of publication of application: **14.08.2024**
(21) Application number: 22910475.7
(22) Date of filing: 14.09.2022
(51) Int. Cl.: H01S 3/042, H01S 3/06, H01S 3/10

(54) **LASER MEDIUM UNIT, LASER AMPLIFICATION DEVICE, AND LASER OSCILLATION DEVICE**

(30) Priority: 24.12.2021 JP 2021211067
(71) Applicant: Hamamatsu Photonics K.K., Hamamatsu-shi, Shizuoka 435-8558 (JP)
(72) Inventor: MORITA, Takaaki, Hamamatsu-shi, Shizuoka 435-8558 (JP); SEKINE, Takashi, Hamamatsu-shi, Shizuoka 435-8558 (JP); KATO, Yoshinori, Hamamatsu-shi, Shizuoka 435-8558 (JP); IGUCHI, Takuto, Hamamatsu-shi, Shizuoka 435-8558 (JP)
(74) Representative: Grünecker Patent- und Rechtsanwälte PartG mbB
(86) International application number: PCT/JP2022/034443
(87) International publication number: WO 2023/119749

(57) **Abstract**

A laser medium unit includes a laser gain medium that is formed in a plate shape, that has a first surface and a second surface, and that generates emission light upon irradiation with excitation light from the first surface; and a light guiding and cooling member connected to the first surface to guide the excitation light toward the first surface and to cool the laser gain medium. The first surface consists of a first region to which the light guiding and cooling member is thermally connected, and a second region other than the first region. An entirety of the second region is thermally isolated from the light guiding and cooling member.

## Description

### Technical Field

One aspect of the present disclosure relates to a laser medium unit, a laser amplification device, and a laser oscillation device.

### Background Art

Patent Literature 1 describes a laser medium unit. The laser medium unit includes a laser gain medium having a plate shape which generates emission light upon irradiation with excitation light from a first surface, and a cooling member thermally connected to a second surface on an opposite side of the laser gain medium from the first surface. In the laser medium unit, by setting a cooling region, which is formed on the second surface by the cooling member, within a range equal to or smaller than an irradiation region of the excitation light on the laser gain medium, the thermal lens effect due to a temperature gradient is reduced.

### Citation List

### Patent Literature

Patent Literature 1: Japanese Unexamined Patent Publication No. 2018-129391

### Summary of Invention

### Technical Problem

In the laser medium unit described above, it is necessary to connect the cooling member to the laser gain medium such that the cooling region by the cooling member is within a range equal to or smaller than the irradiation region of the excitation light, and for example, when the laser gain medium is downsized, high accuracy is required in assembling the cooling member and the laser gain medium.

An object of one aspect of the present disclosure is to provide a laser medium unit, a laser amplification device, and a laser oscillation device capable of improving the ease of assembly while reducing the thermal lens effect.

### Solution to Problem

A laser medium unit according to one aspect of the present disclosure includes: a laser gain medium that is formed in a plate shape, has a first surface and a second surface opposite to the first surface, and generates emission light upon irradiation with excitation light from the first surface; and a light guiding and cooling member connected to the first surface to guide the excitation light toward the first surface and to cool the laser gain medium. The first surface consists of a first region to which the light guiding and cooling member is thermally connected, and a second region other than the first region. An entirety of the second region is thermally isolated from the light guiding and cooling member.

In the laser medium unit, the light guiding and cooling member is connected to the first surface of the laser gain medium, and the light guiding and cooling member guides the excitation light toward the first surface, and cools the laser gain medium. Accordingly, an irradiation region of the excitation light and a cooling region can be reliably aligned on the first surface, and the thermal lens effect can be reliably reduced. In addition, since the irradiation region and the cooling region can be aligned simply by connecting the light guiding and cooling member to the laser gain medium, the ease of assembly can be improved, for example, compared to when the cooling member is connected to the laser gain medium such that the cooling region is located inside the irradiation region set in advance. Furthermore, in the laser medium unit, the first surface of the laser gain medium consists of the first region to which the light guiding and cooling member is thermally connected, and the second region other than the first region, and the entirety of the second region is thermally isolated from the light guiding and cooling member. Accordingly, the non-uniformity of the temperature distribution of the second region in a direction parallel to the first surface can be suppressed, and the occurrence of the thermal lens effect due to the temperature distribution of the second region becoming non-uniform can be suppressed. Therefore, according to the laser medium unit, it is possible to improve the ease of assembly while reducing the thermal lens effect. In addition, in the laser medium unit, since the light guiding and cooling member connected to the first surface can guide the excitation light toward the first surface, and cool the laser gain medium, the configuration of a second surface side can be simplified, and the degree of freedom regarding the disposition of members can be increased.

The second region may surround the first region. In this case, the non-uniformity of the temperature distribution of the second region in the direction parallel to the first surface can be suppressed, and the thermal lens effect can be further reduced.

When viewed in a direction perpendicular to the first surface, the first region may have a shape that is line-symmetrical with respect to a straight line passing through a center of the first surface and that is point-symmetrical with respect to the center. In this case, the temperature distribution of the first region in the direction parallel to the first surface can be made uniform, and the thermal lens effect can be further reduced.

The light guiding and cooling member may include a light guide portion connected to the first surface, and a cooling portion in contact with a side surface of the light guide portion. In this case, the light guide portion can guide the excitation light toward the first surface, and the cooling portion can effectively cool the laser gain medium via the light guide portion.

The light guiding and cooling member may include a light guide portion connected to the first surface. The light guide portion may be configured such that when the excitation light is guided by the light guide portion, an intensity distribution of the excitation light in a direction parallel to the first surface is made uniform. In this case, the first surface can be irradiated with the excitation light having a uniform intensity distribution in the direction parallel to the first surface, and the thermal lens effect can be further reduced. In addition, since the intensity distribution of the excitation light can be made uniform by the light guiding and cooling member, the configuration is simplified, for example, compared to when a member for making the intensity distribution of the excitation light uniform is separately provided.

The light guiding and cooling member may include a light guide portion connected to the first surface. A length of the light guide portion in a direction perpendicular to the first surface may be longer than a length of the light guide portion in a direction parallel to the first surface. In this case, the intensity distribution of the excitation light can be effectively made uniform by the light guide portion.

The laser medium unit according to one aspect of the present disclosure may further include a light source that outputs the excitation light. The light source may be a semiconductor laser having a plurality of light-emitting regions. In this case, the intensity of the excitation light can be increased.

A layer that transmits the excitation light while reflecting the emission light may be formed on the first surface. In this case, it is possible to reflect the emission light toward the second surface side while allowing the excitation light to be incident on the laser gain medium from a first surface side.

A layer that transmits the excitation light while reflecting the emission light may be formed on an incidence surface of the excitation light on the light guiding and cooling member. In this case, it is possible to reflect the emission light toward the second surface side while allowing the excitation light to be incident on the laser gain medium from a first surface side.

A layer that reflects the excitation light while transmitting the emission light may be formed on the second surface. In this case, it is possible to cause the emission light to exit from the second surface while preventing the excitation light from transmitting through the second surface.

A plurality of each of the laser gain mediums and the light guiding and cooling members may be provided. The plurality of laser gain mediums and the plurality of light guiding and cooling members may be alternately connected to each other. In this case, the excitation light can be absorbed by the plurality of laser gain mediums, and the absorption efficiency of the excitation light can be increased. In addition, when the light guiding and cooling members are connected to both sides (a first surface side and a second surface side) of the laser gain medium, the laser gain medium can be excited and cooled from both sides.

The laser medium unit according to one aspect of the present disclosure may further include a plurality of light sources, each of which outputs the excitation light. The excitation light from each of the plurality of light sources may be incident on the light guiding and cooling member. In this case, the intensity of the excitation light can be increased.

The light guiding and cooling member may include a light guide portion connected to the first surface. An outer peripheral surface of the light guide portion may be formed in a tapered shape inclined with respect to a direction perpendicular to the first surface. In this case, the repeated reflection of the excitation light on an inner surface of the light guide portion is easily performed, and the intensity distribution of the excitation light can be effectively made uniform by the light guide portion.

The laser medium unit according to one aspect of the present disclosure may further include a housing having a vacuum internal space. The laser gain medium and the light guiding and cooling member may be disposed in the internal space. In this case, it is possible to suppress the occurrence of dew condensation on the laser gain medium and the like, for example, when the laser gain medium is cooled to a low temperature of 0°C or less.

The light guiding and cooling member may include a light guide portion connected to the first surface. The light guide portion may be formed in a cylindrical shape, and define a flow path, through which a refrigerant flows, inside. In this case, the laser gain medium can be effectively cooled by flowing the refrigerant through the flow path.

A laser amplification device according to one aspect of the present disclosure includes; the laser medium unit described above. Laser light is incident on the first surface or the second surface, and the laser light amplified in the laser gain medium by the emission light is output. According to the laser amplification device, for the reasons described above, it is possible to improve the ease of assembly while reducing the thermal lens effect.

The laser light may be incident on the second surface, and the amplified laser light may be output from the second surface. In this case, since the laser light reciprocates inside the laser gain medium, the action length contributing to the amplification of the laser light can be increased, and the extraction efficiency of light energy can be improved.

A laser amplification device according to one aspect of the present disclosure may include: a plurality of the laser medium units described above. In each of the plurality of laser medium units, laser light may be incident on the second surface, and the laser light amplified in the laser gain medium by the emission light may exit from the second surface. The plurality of laser medium units may include a first laser medium unit and a second laser medium unit. The laser light that has exited from the first laser medium unit may be amplified in the second laser medium unit. In this case, the laser light can be effectively amplified by the plurality of laser medium units.

A laser oscillation device according to one aspect of the present disclosure includes: the laser medium unit described above; and a partial reflection unit that is disposed on an optical path of the emission light output from the laser gain medium, and that laser-oscillates the emission light. According to the laser oscillation device, for the reasons described above, it is possible to improve the ease of assembly while reducing the thermal lens effect.

### Advantageous Effects of Invention

According to one aspect of the present disclosure, it is possible to provide the laser medium unit, the laser amplification device, and the laser oscillation device capable of improving the ease of assembly while reducing the thermal lens effect.

### Brief Description of Drawings

FIG. 1 is a perspective view of a laser amplification device according to an embodiment.
FIG. 2 is a plan view of the laser amplification device.
FIG. 3 is a perspective view of a laser medium unit.
FIG. 4 is a plan view of the laser medium unit.
FIG. 5 is another plan view of the laser medium unit.
FIG. 6 is a view showing a first surface of a laser gain medium.
FIG. 7(a) is a view showing an intensity distribution of a flat-top shape, and FIG. 7(b) is a view showing an intensity distribution of a Gaussian shape.
FIG. 8 is a plan view of a laser medium unit according to a first modification example.
FIG. 9 is a plan view of a laser medium unit according to a second modification example.
FIG. 10 is a plan view of a laser medium unit according to a third modification example.
FIG. 11 is a plan view of a laser medium unit according to a fourth modification example.
FIG. 12 is a plan view of a laser medium unit according to a fifth modification example.
FIG. 13 is a plan view of a laser oscillation device according to a sixth modification example.
FIG. 14 is a perspective view of a laser amplification device according to a seventh modification example.
FIG. 15 is a plan view of the laser amplification device according to the seventh modification example.
FIGS. 16(a) and 16(b) are views showing other disposition examples of a first region and a second region.

### Description of Embodiments

Hereinafter, an embodiment of the present disclosure will be described in detail with reference to the drawings. In the following description, the same reference signs are used for the same or equivalent elements, and duplicate descriptions will be omitted.

### [Laser amplification device]

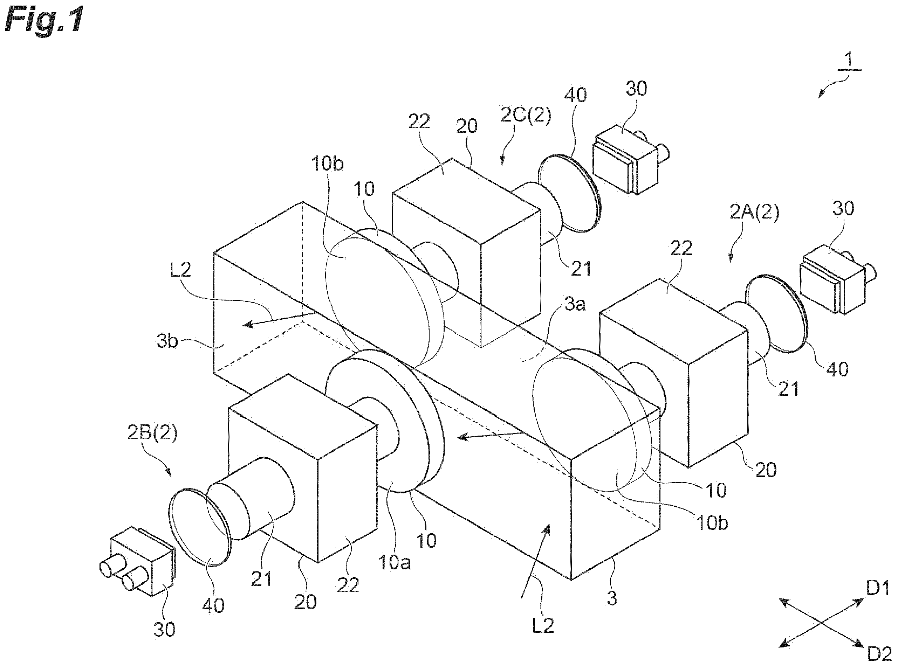

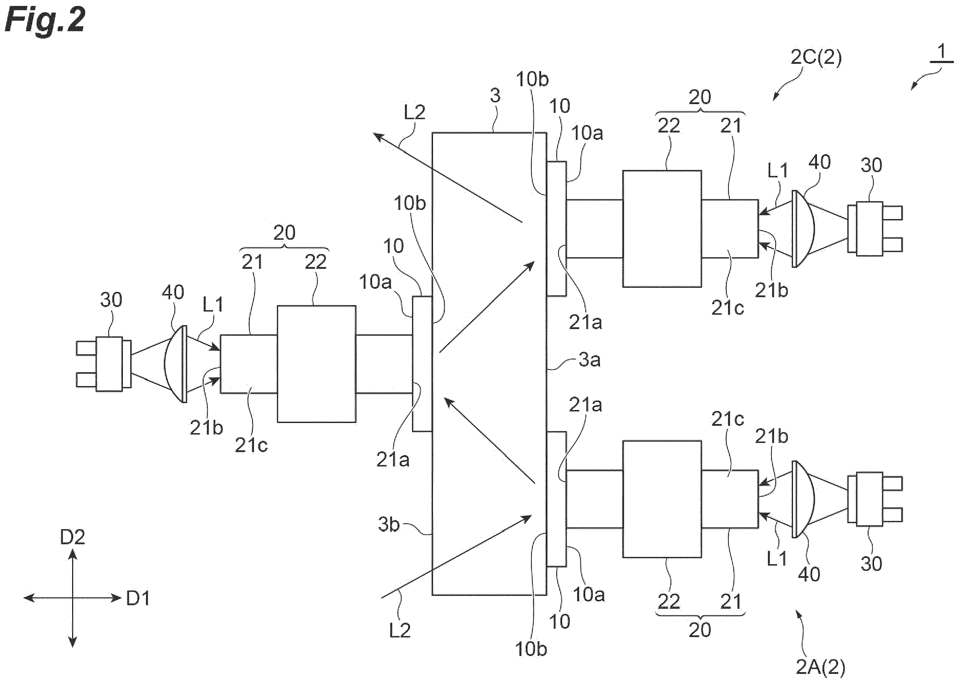

As shown in FIGS. 1 and 2, a laser amplification device 1 is an active mirror type laser device including a plurality of laser medium units 2 and a light-transmitting member 3. In this example, the plurality of laser medium units 2 include three laser medium units 2A, 2B, and 2C. Each of the laser medium units 2A, 2B, and 2C includes a laser gain medium 10, and is connected to the light-transmitting member 3 at the laser gain medium 10.

The light-transmitting member 3 is made of a material capable of transmitting excitation light L1 and laser light L2 to be described later. The light-transmitting member 3 is made of, for example, yttrium aluminum garnet (YAG). The light-transmitting member 3 is not doped with, for example, an active element such as neodymium (Nd).

In the laser amplification device 1, as shown in FIG. 2, the laser light L2 introduced into the light-transmitting member 3 as seed light is sequentially amplified in the laser gain mediums 10 of the laser medium units 2A, 2B, and 2C, and the amplified laser light L2 exits from the light-transmitting member 3 as output light. Hereinafter, first, a configuration of one laser medium unit 2 will be described, but the laser medium units 2A, 2B, and 2C have the same configuration.

### [Laser medium unit]

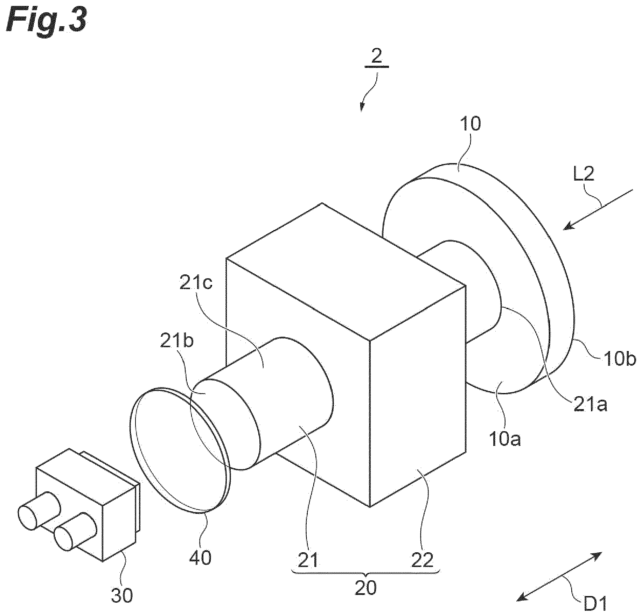

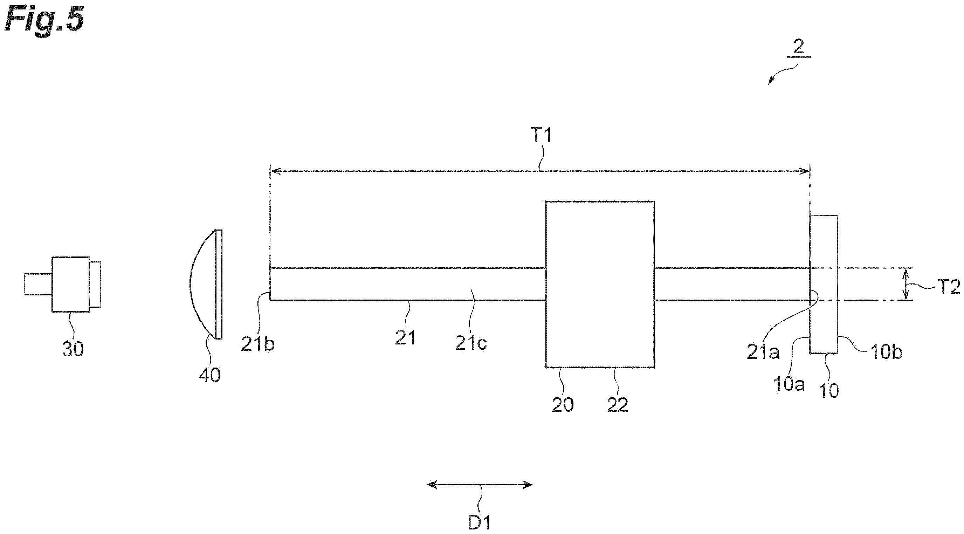

As shown in FIGS. 3, 4, and 5, the laser medium unit 2 (laser head) includes the laser gain medium 10, a light guiding and cooling member 20, a light source 30, and a condenser lens 40. The laser gain medium 10 is made of, for example, YAG doped with neodymium (Nd) as an active element. Namely, the laser gain medium 10 is doped with an active element. The active element doped to YAG may be ytterbium (Yb). The laser gain medium 10 is excited by the excitation light L1 to generate emission light. One example of the emission light is stimulated emission light. The stimulated emission light contributes to light amplification of the laser light L2.

The laser gain medium 10 is formed in, for example, a circular plate shape, and has a first surface 10a and a second surface 10b opposite to the first surface 10a. The first surface 10a and the second surface 10b are major surfaces of the laser gain medium 10 formed in a plate shape, and are flat surfaces parallel to each other. As one example, a diameter of the laser gain medium 10 is approximately 25 mm, and a thickness is approximately 5 mm. Incidentally, the first surface 10a and the second surface 10b may not extend parallel to each other, and for example, the second surface 10b may be inclined by approximately 1 degree with respect to the first surface 10a.

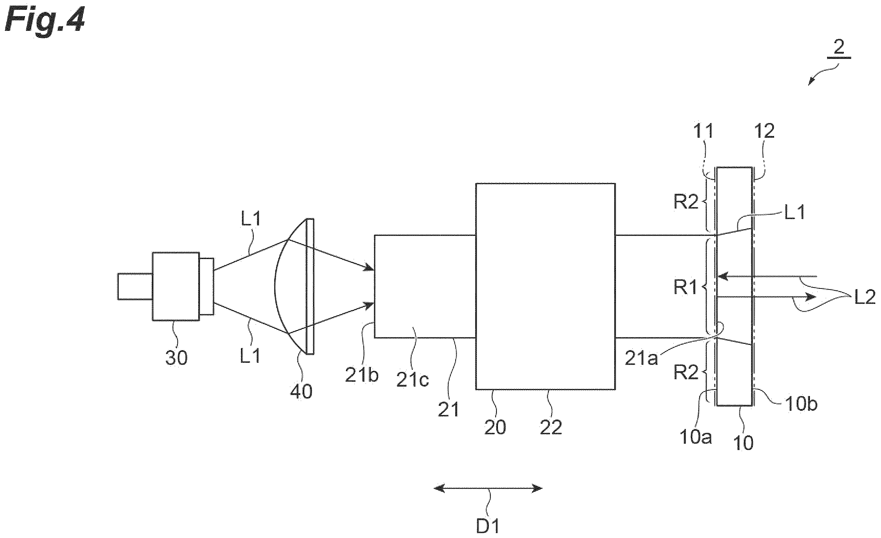

As shown in FIG. 4, a first layer 11 is formed on the first surface 10a. In this example, the first layer 11 is formed over the entirety of the first surface 10a. The first layer 11 functions as a first light selection portion that transmits the excitation light L1 while reflecting the laser light L2 (emission light). The first layer 11 is formed, for example, by applying an anti-reflection coating for the excitation light L1 and a high reflection coating for the laser light L2 to the first surface 10a.

A second layer 12 is formed on the second surface 10b. In this example, the second layer 12 is formed over the entirety of the second surface 10b. The second layer 12 functions as a second light selection portion that reflects the excitation light L1 while transmitting the laser light L2 (emission light). The second layer 12 is formed, for example, by applying a high reflection coating for the excitation light L1 and an anti-reflection coating for the laser light L2 to the second surface 10b.

The light guiding and cooling member 20 includes a light guide portion 21 and a cooling portion 22. The light guide portion 21 is formed in a columnar shape using, for example, sapphire, quartz, non-doped YAG, or the like. In this example, the light guide portion 21 extends along a first direction D1 perpendicular to the first surface 10a, and is connected to the first surface 10a at one end surface 21a in the first direction D1. More specifically, as described above, the first layer 11 is formed on the first surface 10a, and the light guide portion 21 is connected to the first surface 10a via the first layer 11. In such a manner, in this specification, a member A being connected to a member B includes the member A being connected to the member B via another element.

The excitation light L1 is introduced into the light guide portion 21 from an end surface 21b opposite to the end surface 21a. The light guide portion 21 guides the introduced excitation light L1 toward the end surface 21a (first surface 10a). The light guide portion 21 is configured such that when the excitation light L1 is guided by the light guide portion 21, the intensity distribution of the excitation light L1 in a direction parallel to the first surface 10a is made uniform. Namely, when the excitation light L1 is guided by the light guide portion 21, the intensity distribution of the excitation light L1 on the end surface 21a (first surface 10a) is made more uniform than the intensity distribution of the excitation light L1 on the end surface 21b. In this example, the excitation light L1 that has been incident on the light guide portion 21 is incident on the first surface 10a as light that is mixed by being guided while being repeatedly reflected on a side surface 21c of the light guide portion 21, to have a homogenized intensity distribution. When a transverse mode (intensity distribution in the direction parallel to the first surface 10a) of the excitation light L1 being incident on the light guide portion 21 is a single mode, by guiding the excitation light L1 through the light guide portion 21, the transverse mode of the excitation light L1 can be converted into a multimode.

In order to make the intensity distribution of the excitation light L1 uniform, it is advantageous that the aspect ratio of the light guide portion 21 (the ratio of a length T1 in the first direction D1 to a length T2 in the direction parallel to the first surface 10a) is larger. For that reason, in this example, the length T1 of the light guide portion 21 in the first direction D1 is longer than the length T2 of the light guide portion 21 in the direction parallel to the first surface 10a (a maximum length, and in this example, a diameter of the light guide portion 21). Namely, the aspect ratio of the light guide portion 21 is larger than 1. As one example, the length T1 is approximately 100 mm, and the length T2 is approximately 6 mm. In such a manner, the aspect ratio of the light guide portion 21 may be 6 or more or may be 10 or more. The length T1 is the length (maximum length) of the light guide portion 21 at a contact surface (end surface 21a) with the first surface 10a, regardless of the shape of the light guide portion 21.

The cooling portion 22 is, for example, a cooling block made of a metal material such as copper or stainless steel, and is in contact with the side surface 21c of the light guide portion 21. In this example, the cooling portion 22 is formed with a through-hole extending along the first direction D1, and is in contact with the entire circumference of the side surface 21c of the light guide portion 21 at the inner peripheral surface of the through-hole. The cooling portion 22 has, for example, a rectangular outer shape when viewed in the first direction D1. The cooling portion 22 faces the first surface 10a of the laser gain medium 10 in the first direction D1. In this example, the cooling portion 22 is made of a material having a thermal conductivity higher than a thermal conductivity of the light guide portion 21, and cools the light guide portion 21 by dissipating heat from the light guide portion 21 to the outside (air) (conduction cooling). By cooling the light guide portion 21, the laser gain medium 10 to which the light guide portion 21 is connected is also cooled. Namely, the cooling portion 22 cools the laser gain medium 10 via the light guide portion 21.

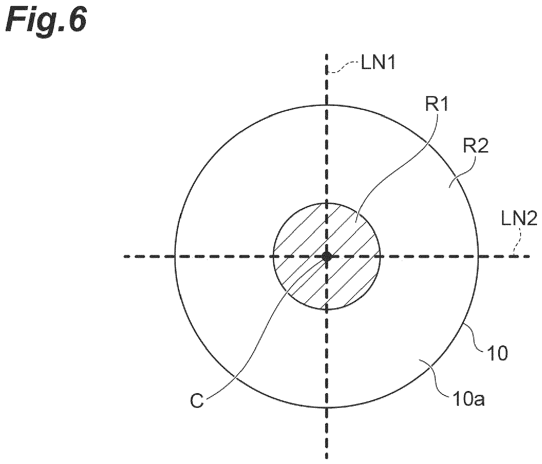

In such a manner, the light guiding and cooling member 20 allows the light guide portion 21 to guide the excitation light L1 toward the first surface 10a of the laser gain medium 10, and allows the cooling portion 22 to cool the laser gain medium 10 via the light guide portion 21. FIG. 6 is a view of the first surface 10a when viewed in the first direction D 1. In FIG. 6, a first region R1 to which the light guide portion 21 is connected is indicated by hatching. As shown in FIG. 6, the first surface 10a consists of two regions: the first region R1 and a second region R2 that is a region other than the first region R1. The first region R1 is a connection region to which the light guide portion 21 is connected, and the second region R2 is a non-connection region to which the light guide portion 21 is not connected.

The light guiding and cooling member 20 is thermally connected to the first region R1. On the other hand, the entirety of the second region R2 is thermally isolated from the light guiding and cooling member 20. "The light guiding and cooling member 20 is thermally connected to the first region R1" means that heat can be transferred between the first region R1 and the light guiding and cooling member 20. "The second region R2 is thermally isolated from the light guiding and cooling member 20" means that heat is not transferred between the second region R2 and the light guiding and cooling member 20 (excluding the transfer of heat via the first region R1). In this example, the light guide portion 21 is thermally connected to the first region R1 via the first layer 11. The light guiding and cooling member 20 is not in contact with the second region R2, and there is a space between the second region R2 and the cooling portion 22. Air exists in the space. Accordingly, the entirety of the second region R2 and the light guiding and cooling member 20 are thermally isolated. In addition, the light guide portion 21 is optically connected to the first region R1 via the first layer 11 (such that light can travel between the first region R1 and the light guide portion 21). The first region R1 functions as an irradiation region where the first surface 10a is irradiated with the excitation light L1 and a cooling region where the laser gain medium 10 is cooled by the light guiding and cooling member 20. The second region R2 is a non-irradiation region where the first surface 10a is not irradiated with the excitation light L1, and is also a non-cooling region where the laser gain medium 10 is not cooled by the light guiding and cooling member 20.

A member having thermal insulation properties may be interposed between the second region R2 and the cooling portion 22 (light guiding and cooling member 20). In this case as well, the second region R2 is thermally isolated from the cooling portion 22. A thermal conductivity of the member may be, for example, 1.0 W/m·k or less. Namely, a member having a thermal conductivity of 1.0 W/m·k or less may be interposed between the second region R2 and the cooling portion 22. Incidentally, in this example, the laser gain medium 10 is fixed by being connected to the light guide portion 21 at the first surface 10a and to the light-transmitting member 3 described above at the second surface 10b, and members other than the light guide portion 21 and the light-transmitting member 3 are not in contact with the laser gain medium 10; however, the laser gain medium 10 may be supported by a member having a thermal conductivity of 1.0 W/m·k or less.

As shown in FIG. 6, when viewed in the first direction D1, each of the first region R1 and the second region R2 has a shape that is line-symmetrical with respect to each of straight lines LN1 and LN2 passing through a center C of the first surface 10a, and that is point-symmetrical with respect to the center C. The straight lines LN1 and LN2 are orthogonal to each other. In this example, the shape of the first region R1 is a circular shape corresponding to the end surface 21a of the light guide portion 21, and the shape of the second region R2 is an annular shape surrounding the first region R1.

The light source 30 is an excitation light source that outputs the excitation light L1. The light source 30 is, for example, a semiconductor laser having a plurality of light-emitting regions. In this example, the light source 30 is formed of a laser diode module in which a plurality of laser diodes having a rectangular plate shape are stacked along a predetermined direction, and has a plurality of light-emitting regions formed of end surfaces of the laser diodes.

The condenser lens 40 guides the excitation light L1 output from the light source 30 to the end surface 21b of the light guide portion 21 while condensing the excitation light L1. The light that has been incident on the end surface 21b is guided toward the first surface 10a of the laser gain medium 10 by the light guide portion 21 to pass through the first layer 11 and to be incident on the first surface 10a. As shown in FIG. 4, the excitation light L1 that has been incident on the first surface 10a travels toward the second surface 10b inside the laser gain medium 10 while spreading in the direction parallel to the first surface 10a. The laser gain medium 10 is irradiated with the excitation light L1 from the first surface 10a to generate emission light. The excitation light L1 that has reached the second surface 10b is reflected by the second layer 12 on the second surface 10b. The divergence angle at which the excitation light L1 spreads when traveling from the first surface 10a toward the second surface 10b changes depending on the size of the light guide portion 21 or the thickness of the laser gain medium 10.

Again with reference to FIGS. 1 and 2, the laser amplification device 1 will be described. In this example, the laser medium units 2A and 2C are connected to a surface 3a of the light-transmitting member 3, and the laser medium unit 2B is connected to a surface 3b of the light-transmitting member 3. The surface 3b is a surface opposite the surface 3a. Each of the laser medium units 2A, 2B, and 2C is connected to the light-transmitting member 3 at the second surface 10b of the laser gain medium 10. The laser medium units 2A, 2B, and 2C are disposed such that the laser light L2 which has exited from the laser medium unit 2A travels through the light-transmitting member 3 and is incident on the laser medium unit 2B, and the laser light L2 which has exited from the laser medium unit 2B travels through the light-transmitting member 3 and is incident on the laser medium unit 2C. In this example, the laser medium units 2A and 2C are arranged along a second direction D2 perpendicular to the first direction D1, and when viewed in the first direction D1, the laser medium unit 2B is located between the laser medium units 2A and 2C.

The laser amplification device 1 includes a laser light source unit (not shown) that outputs or guides and supplies the laser light L2 toward the light-transmitting member 3. The laser light L2 that has been incident on the light-transmitting member 3 first travels toward the second surface 10b of the laser gain medium 10 of the laser medium unit 2A, passes through the second layer 12, and is incident on the second surface 10b. When the laser light L2 is incident on the laser gain medium 10 excited by the excitation light L1, the laser light L2 is amplified by emission light due to stimulated emission phenomenon. The amplified laser light L2 exits from the second surface 10b of the laser gain medium 10 of the laser medium unit 2A. The laser light L2 that has exited from the second surface 10b of the laser gain medium 10 of the laser medium unit 2A is incident on the second surface 10b of the laser gain medium 10 of the laser medium unit 2B, is amplified in the laser gain medium 10, and exits from the second surface 10b. In such a manner, in the laser amplification device 1, the laser light L2 that has exited from the laser medium unit 2A (first laser medium unit) is amplified in the laser medium unit 2B (second laser medium unit).

The laser light L2 that has exited from the second surface 10b of the laser gain medium 10 of the laser medium unit 2B is incident on the second surface 10b of the laser gain medium 10 of the laser medium unit 2C, is amplified in the laser gain medium 10, and exits from the second surface 10b. The laser light L2 that has exited from the laser medium unit 2C exits from the light-transmitting member 3, and is extracted to the outside as output light of the laser amplification device 1. The laser light L2 that is incident on the laser gain medium 10 of each laser medium unit 2 from the second surface 10b and reaches the first surface 10a is reflected by the first layer 11 on the first surface 10a.

### [Functions and effects]

In the laser medium unit 2, the light guiding and cooling member 20 is connected to the first surface 10a of the laser gain medium 10, and the light guiding and cooling member 20 guides the excitation light L1 toward the first surface 10a, and cools the laser gain medium 10. Accordingly, the irradiation region of the excitation light L1 and the cooling region can be reliably aligned on the first surface 10a, and the thermal lens effect can be reliably reduced. Namely, the thermal lens effect occurring due to a difference in the amount of phase shift at a boundary portion between the irradiation region and the non-cooling region can be reduced (the temperature gradient can be reduced) (refer to Patent Literature 1 described above). In addition, since the irradiation region and the cooling region can be aligned simply by connecting the light guiding and cooling member 20 to the laser gain medium 10, the ease of assembly can be improved, for example, compared to when the cooling member is connected to the laser gain medium such that the cooling region is located inside the irradiation region set in advance. Furthermore, in the laser medium unit 2, the first surface 10a of the laser gain medium 10 consists of the first region R1 to which the light guiding and cooling member 20 is thermally connected, and the second region R2 other than the first region R1, and the entirety of the second region R2 is thermally isolated from the light guiding and cooling member 20. Accordingly, the non-uniformity of the temperature distribution of the second region R2 in the direction parallel to the first surface 10a can be suppressed, and the occurrence of the thermal lens effect due to the temperature distribution of the second region R2 becoming non-uniform can be suppressed. Therefore, according to the laser medium unit 2, it is possible to improve the ease of assembly while reducing the thermal lens effect. In addition, in the laser medium unit 2, since the light guiding and cooling member 20 connected to the first surface 10a can guide the excitation light L1 toward the first surface 10a, and cool the laser gain medium 10, the configuration of a second surface 10b side can be simplified, and the degree of freedom regarding the disposition of members can be increased.

The second region R2 surrounds the first region R1. Accordingly, the non-uniformity of the temperature distribution of the second region R2 in the direction parallel to the first surface 10a can be suppressed, and the thermal lens effect can be further reduced.

When viewed in the first direction D1 perpendicular to the first surface 10a, the first region R1 has a shape that is line-symmetrical with respect to the straight lines LN1 and LN2 passing through the center C of the first surface 10a, and that is point-symmetrical with respect to the center C. Accordingly, the temperature distribution of the first region R1 in the direction parallel to the first surface 10a can be made uniform, and the thermal lens effect can be further reduced.

The light guiding and cooling member 20 includes the light guide portion 21 connected to the first surface 10a of the laser gain medium 10, and the cooling portion 22 that is in contact with the side surface 21c of the light guide portion 21. Accordingly, the light guide portion 21 can guide the excitation light L1 toward the first surface 10a, and the cooling portion 22 can effectively cool the laser gain medium 10 via the light guide portion 21.

The light guide portion 21 is configured such that when the excitation light L1 is guided by the light guide portion 21, the intensity distribution of the excitation light L1 in the direction parallel to the first surface 10a is made uniform. Accordingly, the first surface 10a can be irradiated with the excitation light L1 having a uniform intensity distribution in the direction parallel to the first surface 10a, and the thermal lens effect can be further reduced. In addition, since the intensity distribution of the excitation light L1 can be made uniform by the light guiding and cooling member 20, the configuration can be simplified, for example, compared to when a member for making the intensity distribution of the excitation light L1 uniform (for example, a homogenizer such as a fly-eye lens, a diffractive optical element, or a light guide path) is separately provided. As a result, it is possible to reduce the number of components, suppress the complexity of the optical system, and suppress the occurrence of loss in the excitation light.

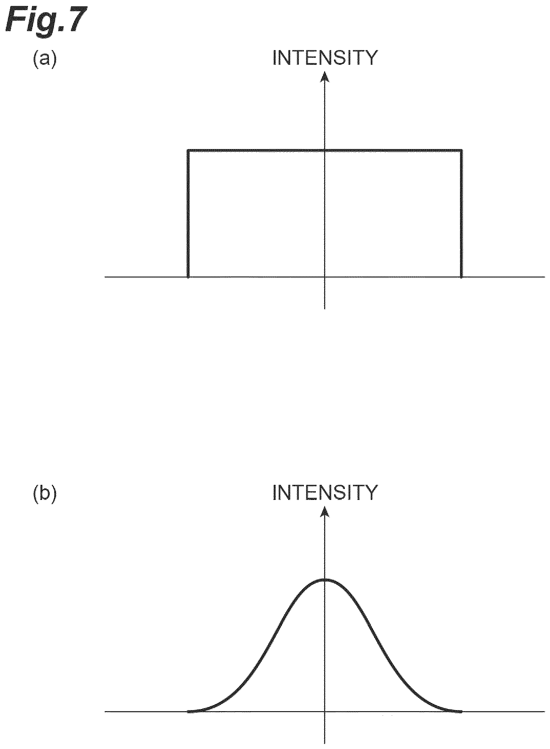

This point will be further described with reference to FIG. 7. In a disk-shaped laser head such as the laser medium unit 2 of the embodiment, the laser gain medium 10 having a plate shape is used. The disk-shaped laser head is more resistant to thermal damage and has a smaller thermal effect, for example, compared to a rod-shaped laser head in which the laser gain medium 10 that is elongated is used, so that the disk-shaped laser head can be thermally advantageous. However, the disk-shaped laser head is thermally advantageous when the intensity distribution of the excitation light has a uniform flat-top shape as shown in FIG. 7(a), and can have the same thermal characteristics as the rod-shaped laser head when the intensity distribution of the excitation light has a Gaussian shape as shown in FIG. 7(b). In this regard, as described above, in the laser medium unit 2 of the embodiment, the intensity distribution of the excitation light L1 can be made uniform by the light guide portion 21, and the thermal lens effect can be reliably reduced. In addition, since the intensity distribution of the excitation light L1 can be made uniform by the light guiding and cooling member 20, the configuration can be simplified, for example, compared to when a member for making the intensity distribution of the excitation light L1 uniform is separately provided.

The length T1 of the light guide portion 21 in the first direction D1 perpendicular to the first surface 10a is longer than the length T2 of the light guide portion 21 in the direction parallel to the first surface 10a. Accordingly, the intensity distribution of the excitation light L1 can be effectively made uniform by the light guide portion 21.

The light source 30 is, for example, a semiconductor laser having a plurality of light-emitting regions. Accordingly, the intensity of the excitation light L1 can be increased. Meanwhile, when light from such a semiconductor laser is condensed, a light pattern remains for each light-emitting region, and the intensity distribution of the excitation light L1 is likely to have a Gaussian shape. In this regard, in the laser medium unit 2 of the embodiment, since the intensity distribution of the excitation light L1 can be made uniform by the light guide portion 21, even when such a semiconductor laser is used as the light source 30, the first surface 10a can be irradiated with the uniform excitation light L1.

The first layer 11 that transmits the excitation light L1 while reflecting the laser light L2 (emission light) is formed on the first surface 10a. Accordingly, it is possible to reflect the emission light toward the second surface 10b side while allowing the excitation light L1 to be incident on the laser gain medium 10 from a first surface 10a side. In addition, when the laser light L2 is incident from the second surface 10b side, for example, it is necessary for the laser light L2 to reach the end surface 21b of the light guide portion 21, so that it is not necessary to reduce the entry angle of the laser light L2 with respect to the second surface 10b. As a result, the allowable range of the entry angle of the laser light L2 with respect to the second surface 10b can be widened.

The second layer 12 that reflects the excitation light L1 while transmitting the laser light L2 (emission light) is formed on the second surface 10b. Accordingly, it is possible to cause the laser light L2 to exit from the second surface 10b while preventing the excitation light L1 from transmitting through the second surface 10b.

In the laser amplification device 1, the laser light L2 is incident on the second surface 10b, and the laser light L2 amplified in the laser gain medium 10 by the emission light is output from the second surface 10b. In this case, since the laser light L2 reciprocates inside the laser gain medium 10, the action length contributing to the amplification of the laser light L2 can be increased, and the extraction efficiency of light energy can be improved.

In the laser amplification device 1, the plurality of laser medium units 2 include the laser medium unit 2A (first laser medium unit) and the laser medium unit 2B (second laser medium unit), and the laser light L2 that has exited from the laser medium unit 2A is amplified in the laser medium unit 2B. Accordingly, the laser light L2 can be effectively amplified by the plurality of laser medium units 2.

### [Modification examples]

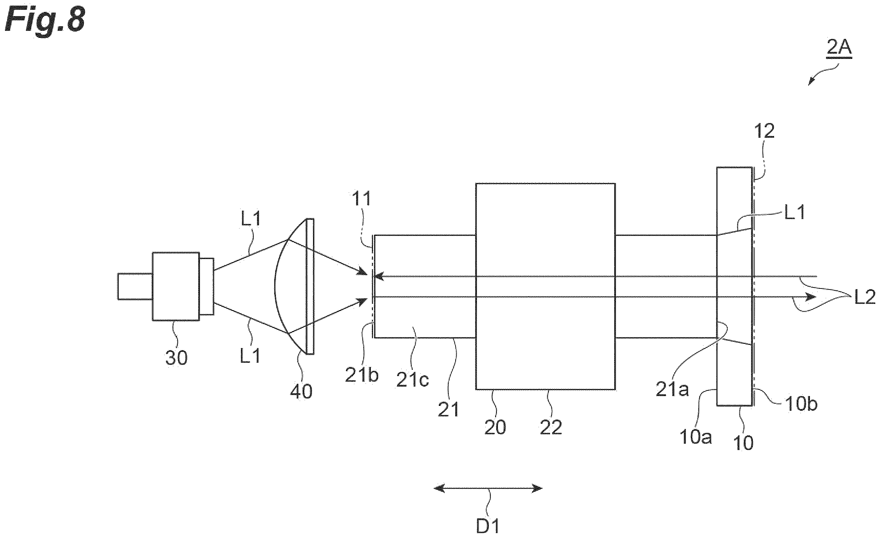

In the laser medium unit 2A of a first modification example shown in FIG. 8, the first layer 11 is not formed on the first surface 10a of the laser gain medium 10, and the first layer 11 is formed on the end surface 21b of the light guide portion 21 (incidence surface of the excitation light L1 on the light guiding and cooling member 20). The first layer 11 is formed, for example, over the entirety of the end surface 21b. The laser light L2 that has been incident on the second surface 10b of the laser gain medium 10 is reflected by the first layer 11 on the end surface 21b. In the first modification example, the laser gain medium 10 and the light guide portion 21 are made of different types of materials having refractive indexes similar to each other. For example, the laser gain medium 10 is made of YAG doped with Nd, and the light guide portion 21 is made of non-doped YAG. With the laser medium unit 2A of the first modification example as well, similarly to the embodiment, it is possible to improve the ease of assembly while reducing the thermal lens effect. In addition, since the first layer 11 that transmits the excitation light L1 while reflecting the laser light L2 (emission light) is formed on the incidence surface of the excitation light L1 on the light guiding and cooling member 20, it is possible to reflect the emission light toward the second surface 10b side while allowing the excitation light L1 to be incident on the laser gain medium 10 from the first surface 10a side. In addition, since the first layer 11 is not formed on the first surface 10a, the joining between the laser gain medium 10 and the light guiding and cooling member 20 can be facilitated. Incidentally, when the laser gain medium 10 and the light guide portion 21 are made of different types of materials having refractive indexes that are greatly different from each other, in order to suppress the occurrence of loss due to reflection at a boundary portion between the laser gain medium 10 and the light guide portion 21, an anti-reflection layer may be formed on the first surface 10a. In other words, in the first modification example, since the laser gain medium 10 and the light guide portion 21 are made of different types of materials having refractive indexes similar to each other, the occurrence of loss due to reflection at the boundary portion between the laser gain medium 10 and the light guide portion 21 can be suppressed.

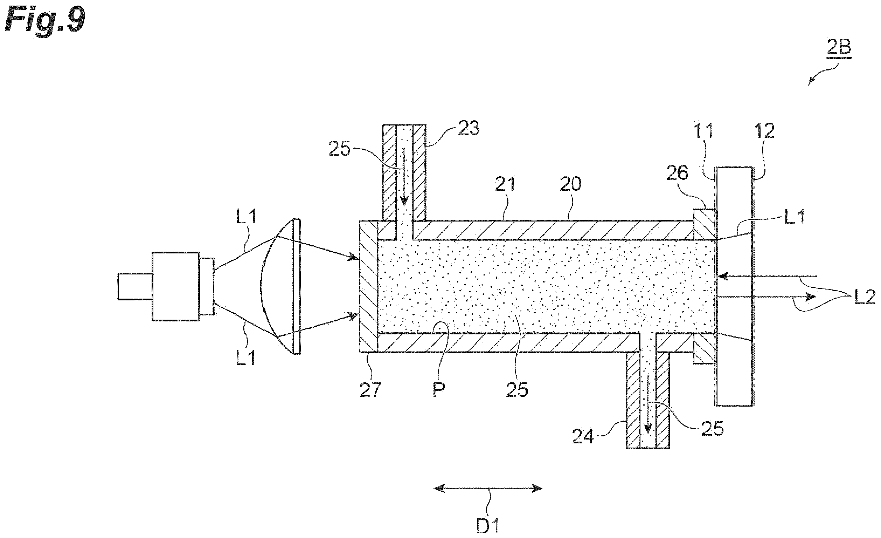

FIG. 9 is a plan view of the laser medium unit 2 according to a second modification example. In FIG. 9, the light guiding and cooling member 20 is shown in cross section. In the laser medium unit 2B of the second modification example, the light guiding and cooling member 20 incudes the light guide portion 21 configured as a barrel, and does not include the cooling portion 22. The inside of the light guide portion 21 is hollow, and an inner surface of the light guide portion 21 is subjected to mirror polishing treatment, metal plating treatment, or reflection coating treatment (coating with a dielectric multilayer film or a metal evaporated film). The excitation light L1 that has been incident on the light guide portion 21 is mixed by being guided while being repeatedly reflected on the inner surface of the light guide portion 21. Namely, in the second modification example as well, the light guide portion 21 is configured such that when the excitation light L1 is guided by the light guide portion 21, the intensity distribution of the excitation light L1 in the direction parallel to the first surface 10a is made uniform.

The light guide portion 21 defines a flow path P, through which a refrigerant 25 flows, inside. An inflow pipe 23 and a discharge pipe 24 are connected to the light guide portion 21, and the refrigerant 25 is introduced from the inflow pipe 23, flows through the flow path P, and is discharged from the discharge pipe 24 to the outside. The refrigerant 25 is, for example, a solution or gas. A refrigerant that does not absorb the excitation light L1 is used as the refrigerant 25. The first surface 10a of the laser gain medium 10 is cooled by flowing the refrigerant 25 through the flow path P. For example, a heat insulating member 26 such as an O-ring is disposed between the light guide portion 21 and the first surface 10a. An end portion on an opposite side of the light guide portion 21 from the first surface 10a is closed by a lid member 27. With the laser medium unit 2B of the second modification example as well, similarly to the embodiment, it is possible to improve the ease of assembly while reducing the thermal lens effect. In addition, the laser gain medium 10 can be effectively cooled by flowing the refrigerant 25 through the flow path P. In the laser medium unit 2B, a portion of the first surface 10a corresponding to the inside (flow path P side) of the heat insulating member 26 becomes the first region, and a region corresponding to the heat insulating member 26 and a region corresponding to the outside (side opposite to the flow path P) of the heat insulating member 26 become the second region.

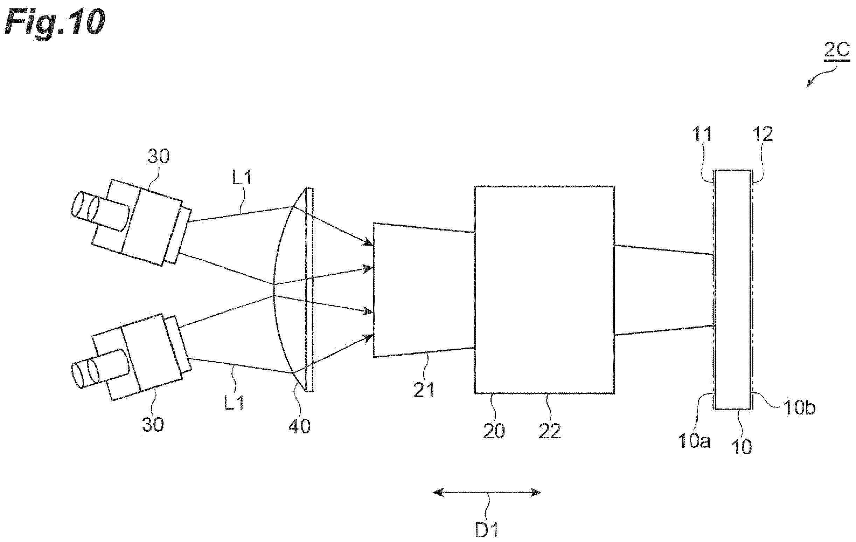

The laser medium unit 2C of a third modification example shown in FIG. 10 includes a plurality of the light sources 30. In the third modification example, an outer peripheral surface of the light guide portion 21 is formed in a tapered shape that is inclined with respect to the first direction D1. In this example, the outer peripheral surface of the light guide portion 21 is formed in a tapered shape that is inclined such that the diameter of the light guide portion 21 decreases as the light guide portion 21 approaches the first surface 10a. With the laser medium unit 2C of the third modification example as well, similarly to the embodiment, it is possible to improve the ease of assembly while reducing the thermal lens effect. In addition, by using the plurality of light sources 30, the intensity of the excitation light L1 can be increased. In addition, since the outer peripheral surface of the light guide portion 21 is formed in a tapered shape such that the diameter of the light guide portion 21 decreases as the light guide portion 21 approaches the first surface 10a, even when the plurality of light sources 30 are used, the excitation light L1 is easily incident on the light guide portion 21. In addition, since the outer peripheral surface of the light guide portion 21 is formed in a tapered shape that is inclined with respect to the first direction D1, the repeated reflection of the excitation light L1 on the inner surface of the light guide portion 21 is easily performed, and the intensity distribution of the excitation light L1 can be effectively made uniform by the light guide portion 21.

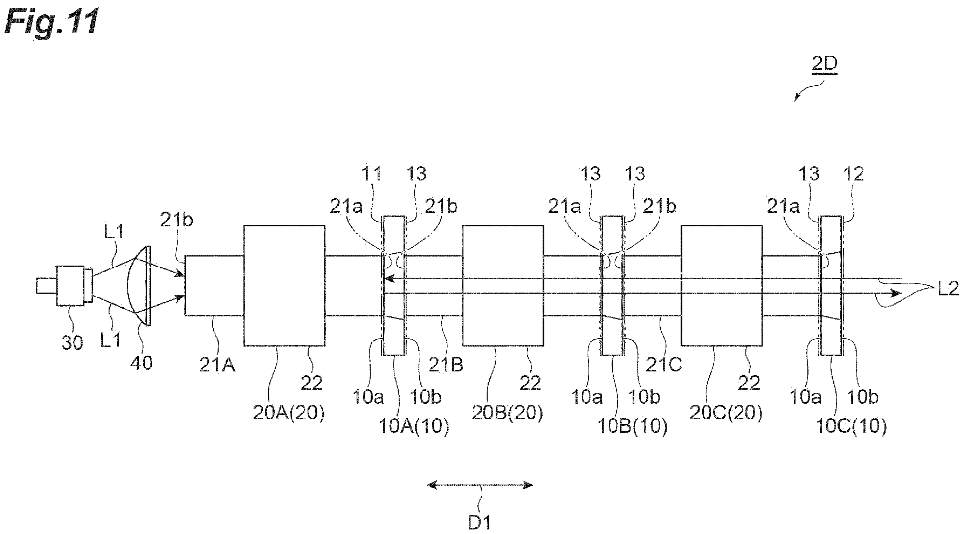

A laser medium unit 2D of a fourth modification example shown in FIG. 11 includes a plurality (three in this example) of the laser gain mediums 10 and a plurality (three in this example) of the light guiding and cooling members 20. In the fourth modification example, the laser gain mediums 10 and the light guiding and cooling members 20 are alternately connected to each other.

When the three laser gain mediums 10 are referred to as respective laser gain mediums 10A, 10B, and 10C, the three light guiding and cooling members 20 are referred to as respective light guiding and cooling members 20A, 20B, and 20C, and the light guide portions 21 of the light guiding and cooling members 20A, 20B, and 20C are referred to as respective light guide portions 21A, 21B, and 21C, the end surface 21a of the light guide portion 21A is connected to the first surface 10a of the laser gain medium 10A. The end surface 21b of the light guide portion 21B is connected to the second surface 10b of the laser gain medium 10A. The end surface 21a of the light guide portion 21B is connected to the first surface 10a of the laser gain medium 10B. The end surface 21b of the light guide portion 21C is connected to the second surface 10b of the laser gain medium 10B. The end surface 21a of the light guide portion 21C is connected to the first surface 10a of the laser gain medium 10C. The second surface 10b of the laser gain medium 10C is connected to, for example, the light-transmitting member 3, and serves as an entrance and exit surface of the laser light L2.

The first layer 11 that transmits the excitation light L1 while reflecting the laser light L2 is formed on the first surface 10a of the laser gain medium 10A. Layers 13 that transmit the excitation light L1 and the laser light L2 are formed on the second surfaces 10b of the laser gain mediums 10A and 10B and on the first surfaces 10a of the laser gain mediums 10B and 10C. The second layer 12 that reflects the excitation light L1 while transmitting the laser light L2 is formed on the second surface 10b of the laser gain medium 10C.

The excitation light L1 is incident on the end surface 21b of the light guide portion 21A, and is sequentially absorbed by the laser gain mediums 10A, 10B, and 10C. The laser light L2 that has been incident on the second surface 10b of the laser gain medium 10C is sequentially amplified by the laser gain mediums 10C, 10B, and 10A, and then is reflected by the first layer 11 on the first surface 10a of the laser gain medium 10A, propagates toward the second surface 10b of the laser gain medium 10C while being sequentially amplified by the laser gain mediums 10A, 10B, and 10C, and exits from the second surface 10b of the laser gain medium 10C.

With the laser medium unit 2D of the fourth modification example as well, similarly to the embodiment, it is possible to improve the ease of assembly while reducing the thermal lens effect. In addition, since the plurality of laser gain mediums 10 and the plurality of light guiding and cooling members 20 are alternately connected to each other, the excitation light L1 can be absorbed by the plurality of laser gain mediums 10, and the absorption efficiency of the excitation light L1 can be increased. In addition, since the light guiding and cooling members 20A and 20B are connected to both sides (the first surface 10a side and the second surface 10b side) of the laser gain medium 10A, the laser gain medium 10A can be excited and cooled from both sides. Similarly, since the light guiding and cooling members 20B and 20C are connected to both sides of the laser gain medium 10B, the laser gain medium 10B can be excited and cooled from both sides.

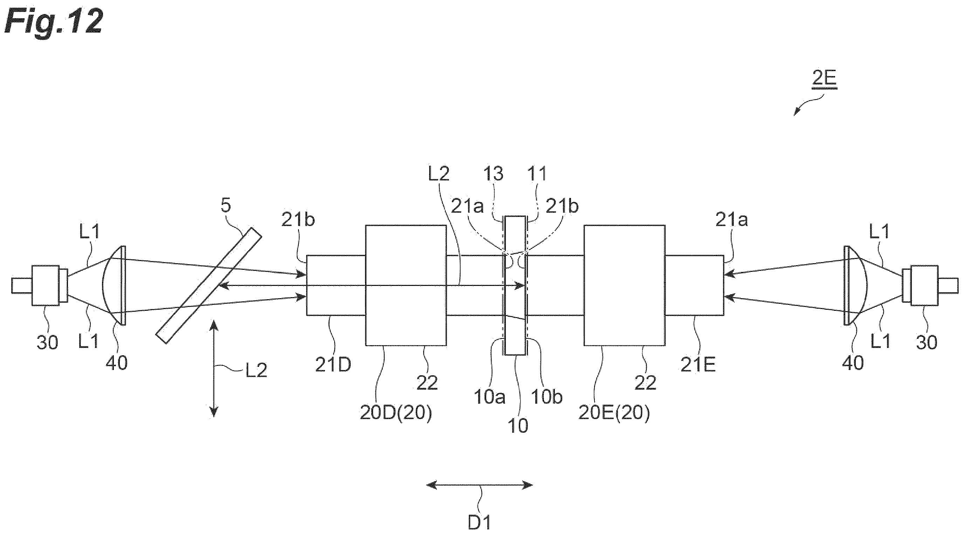

A laser medium unit 2E of a fifth modification example shown in FIG. 12 includes a plurality (two in this example) of the light guiding and cooling members 20. When the two light guiding and cooling members 20 are referred to as respective light guiding and cooling members 20D and 20E, and the light guide portions 21 of the light guiding and cooling members 20D and 20E are referred to as respective light guide portions 21D and 21E, the end surface 21a of the light guide portion 21D is connected to the first surface 10a of the laser gain medium 10, and the end surface 21b of the light guide portion 21B is connected to the second surface 10b of the laser gain medium 10. The layer 13 that transmits the excitation light L1 and the laser light L2 is formed on the first surface 10a of the laser gain medium 10. The first layer 11 that transmits the excitation light L1 while reflecting the laser light L2 is formed on the second surface 10b of the laser gain medium 10.

The laser medium unit 2E of the fifth modification example includes a plurality (two in this example) of the light sources 30 and a plurality (two in this example) of the condenser lenses 40. The excitation light L1 output from a first light source 30 is condensed by a first condenser lens 40, is incident on the end surface 21b of the light guide portion 21D, and is guided by the light guide portion 21D, and the first surface 10a of the laser gain medium 10 is irradiated with the excitation light L1. The excitation light L1 output from a second light source 30 is condensed by a second condenser lens 40, is incident on the end surface 21a of the light guide portion 21E, and is guided by the light guide portion 21E, and the second surface 10b of the laser gain medium 10 is irradiated with the excitation light L1. In such a manner, in this example, irradiation is performed with the excitation light L1 from both the first surface 10a and the second surface 10b.

The laser medium unit 2E of the fifth modification example includes a dichroic mirror 5 disposed between the first condenser lens 40 and the light guide portion 21D. The dichroic mirror 5 transmits the excitation light L1 while reflecting the laser light L2. The excitation light L1 output from the first light source 30 transmits through the dichroic mirror 5, and is incident on the end surface 21b of the light guide portion 21D. In this example, the laser light L2 is supplied toward the dichroic mirror 5. The laser light L2 is reflected toward the end surface 21b of the light guide portion 21D by the dichroic mirror 5, is incident on the end surface 21b of the light guide portion 21D, and is guided by the light guide portion 21D to be incident on the first surface 10a of the laser gain medium 10. In such a manner, in this example, the excitation light L1 and the laser light L2 are introduced from one side of the laser gain medium 10.

With the laser medium unit 2E of the fifth modification example as well, similarly to the embodiment, it is possible to improve the ease of assembly while reducing the thermal lens effect. In addition, since the light guiding and cooling members 20D and 20E are connected to both sides of the laser gain medium 10, the laser gain medium 10 can be excited and cooled from both sides, and the cooling of the laser gain medium 10 and the storage of energy in the laser gain medium 10 can be efficiently performed. Incidentally, in the fifth modification example, the light guiding and cooling member 20E, the second light source 30, and the second condenser lens 40 may be omitted.

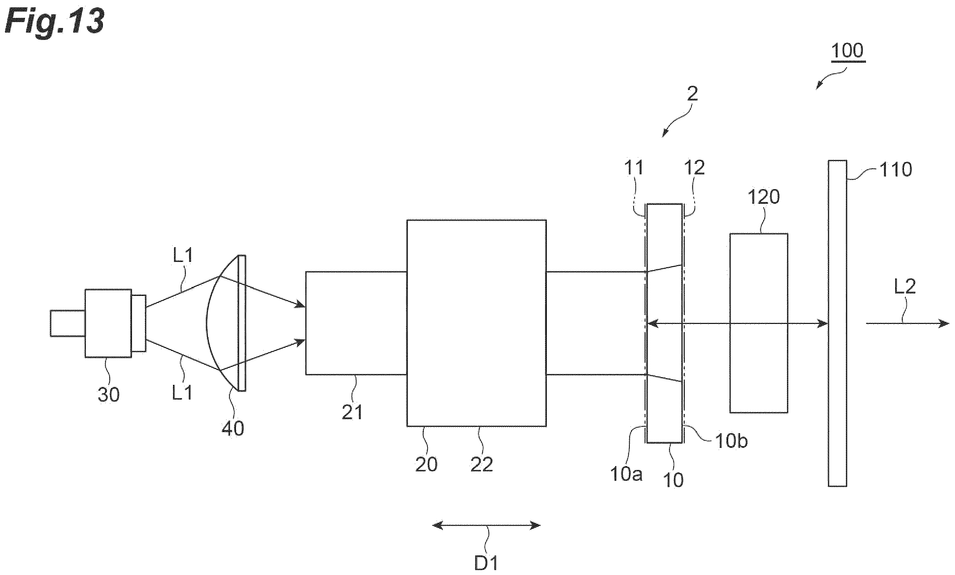

As in a sixth modification example shown in FIG. 13, the laser medium unit 2 may constitute a laser oscillation device 100. The laser oscillation device 100 includes the laser medium unit 2, a partial reflection mirror (partial reflection unit) 110, and an optical member 120. The partial reflection mirror 110 is a mirror that transmits some of incident light while reflecting the remainder. The partial reflection mirror 110 may be a mirror having a flat surface, or may be a mirror having a surface with a curvature. The partial reflection mirror 110 is disposed on an optical path of emission light output from the laser gain medium 10, and laser-oscillates the emission light.

The optical member 120 is a member functioning as, for example, a Q-switch formed of a supersaturated absorber or a Pockels cell. The optical member 120 is disposed between the laser gain medium 10 and the partial reflection mirror 110. In the laser oscillation device 100, the emission light generated in the laser gain medium 10 reciprocates between the first surface 10a (first layer 11) of the laser gain medium 10 and the partial reflection mirror 110 while being amplified, to be laser-oscillated, and the laser light L2 transmits through the partial reflection mirror 110, and is extracted to the outside as output light. With the laser oscillation device 100 of the sixth modification example as well, for the reasons described above, it is possible to improve the ease of assembly while reducing the thermal lens effect. In the sixth modification example, instead of the partial reflection mirror 110, a partial reflection layer (partial reflection unit) may be formed on the second surface 10b of the laser gain medium 10. In this case, the optical member 120 is omitted. Alternatively, in the sixth modification example, instead of the partial reflection mirror 110, a partial reflection layer (partial reflection unit) is formed on a surface on an opposite side (right side in FIG. 13) of the optical member 120 from the laser gain medium 10.

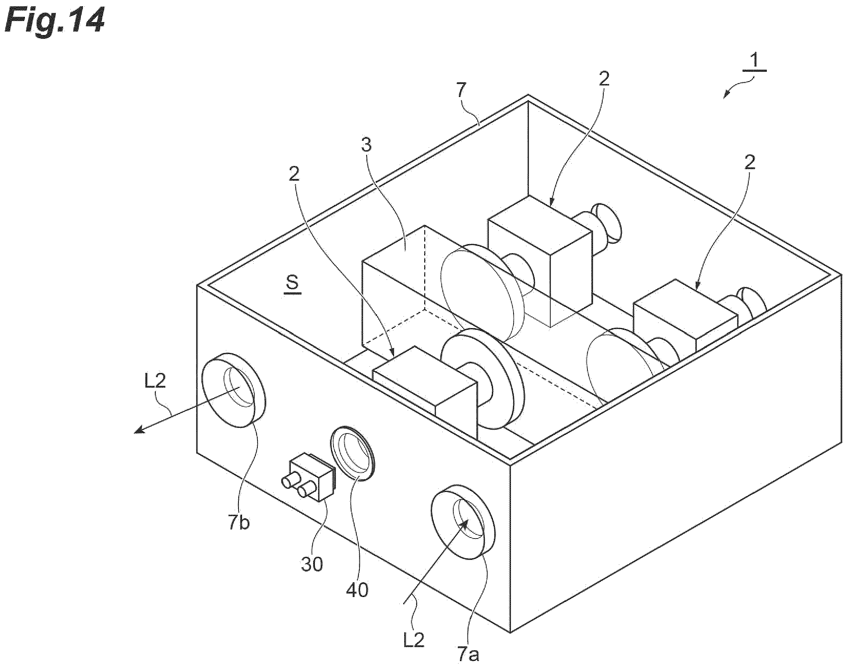

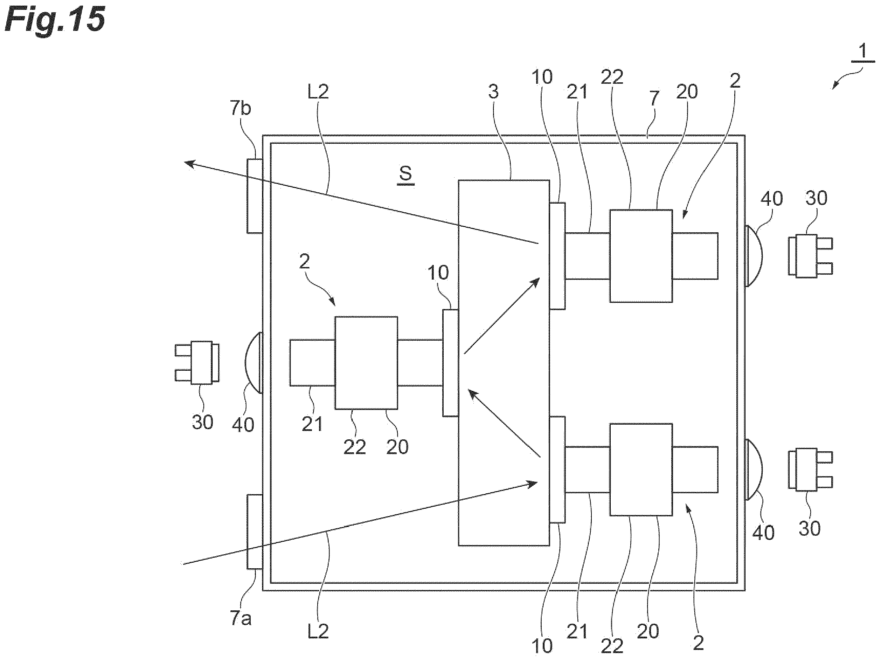

In a seventh modification example shown in FIGS. 14 and 15, the laser amplification device 1 includes a housing 7. In this example, the housing 7 is a vacuum chamber, and the inside of the housing 7 is in a vacuum state. Namely, the housing 7 has a vacuum internal space S. The laser medium units 2 and the light-transmitting member 3 are disposed in the internal space S, and are accommodated in the housing 7. Such a configuration is effective in suppressing the occurrence of dew condensation on the laser gain mediums 10 and the like, for example, when the laser gain mediums 10 are cooled to a low temperature of 0°C or less. A wall portion of the housing 7 is provided with an entrance window portion 7a which the laser light L2 is incident on, and an exit window portion 7b from which the laser light L2 exits. In this example, the condenser lens 40 is attached to the wall portion of the housing 7 as a window portion, and the light source 30 is disposed outside the housing 7. Alternatively, the condenser lens 40 may be disposed outside the housing 7. In this case, the wall portion of the housing 7 may be provided with a window portion that transmits the excitation light L1 from the condenser lens 40. The light-transmitting member 3 and each laser gain medium 10 may be fixed to the housing 7 via a heat insulating member. In this case, it is possible to suppress misalignment between the plurality of laser medium units 2 while suppressing the occurrence of the thermal lens effect, and it is possible to realize stable driving of the laser amplification device 1. As the heat insulating member, for example, a resin member having a low thermal conductivity, a ceramic ball, a needle, or the like can be used. When a ceramic ball or a needle is used, the heat flow path can be reduced by supporting each member through point contact, and sufficient thermal insulation from the housing 7 can be achieved. With the laser amplification device 1 of the seventh modification example as well, for the reasons described above, it is possible to improve the ease of assembly while reducing the thermal lens effect. Incidentally, the housing 7 can also be deemed to be a part of the laser medium units 2.

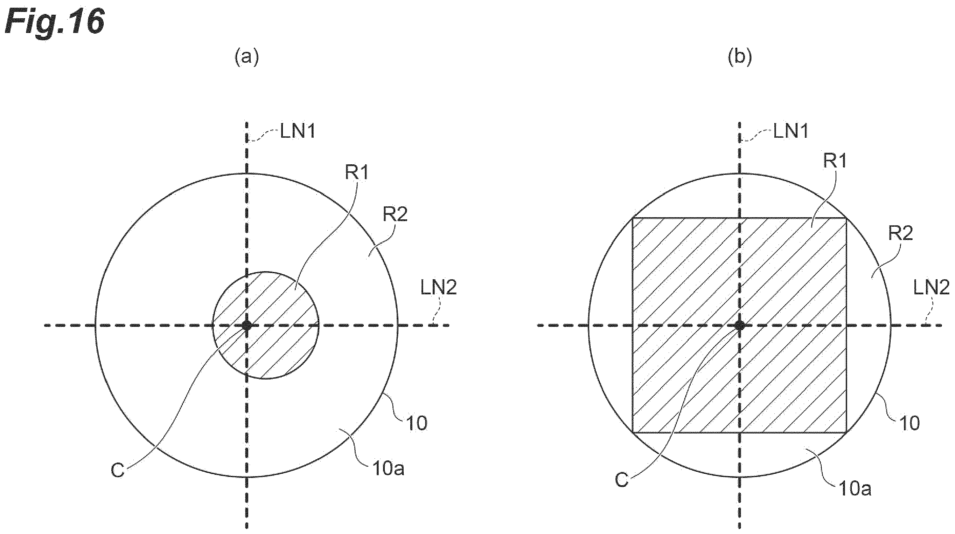

The first region R1 and the second region R2 may be disposed on the first surface 10a of the laser gain medium 10 as in disposition examples shown in FIGS. 16(a) and 16(b). In the example of FIG. 16(a), the center of the first region R1 is offset from the center C of the first surface 10a. In the example of FIG. 16(b), the first region R1 is formed in a rectangular shape, and is not surrounded by the second region R2. With the laser medium unit 2 on which the first region R1 and the second region R2 are disposed in such a manner, similarly to the embodiment, it is possible to improve the ease of assembly while reducing the thermal lens effect.

The present disclosure is not limited to the embodiment and the modification examples. The material and shape of each configuration are not limited to the material and shape described above, and various materials and shapes can be adopted. For example, the shape of the laser gain medium 10 when viewed in the first direction D1 is not limited to a circular shape, and for example, may be any shape such as a rectangular shape. The material of the cooling portion 22 is not limited to a metal material, and may be, for example, sapphire or the like.

In the embodiment, the light-transmitting member 3 may be omitted. For example, the light-transmitting member 3 may be replaced with a space. In this case as well, for example, by disposing the laser medium units 2A, 2B, and 2C in the same positional relationship as in the embodiment, the laser amplification device 1 can be operated in the same manner as in the embodiment. In the embodiment, the laser amplification device 1 may include only one laser medium unit 2.

The shape of the light guide portion 21 may be any shape and may be, for example, a hexagonal column shape. In the embodiment, the cooling portion 22 may be omitted. In this case, for example, by forming the light guide portion 21 using a material having a high thermal conductivity (for example, sapphire), the laser gain medium 10 can be cooled by natural heat dissipation. The cooling portion 22 may cool the light guide portion 21 through air cooling or water cooling. For example, in the embodiment, a Peltier element may be connected to the cooling block constituting the cooling portion 22. Alternatively, a through-hole may be formed in the cooling block, and a cooling liquid or gas may flow into the through-hole. Such a cooling method is particularly effective when the laser gain medium 10 and the light guiding and cooling member 20 are disposed in a vacuum state as in the seventh modification example and natural heat dissipation is less likely to occur.

The first layer 11 may not formed over the entirety of the first surface 10a. For example, the first layer 11 may be formed only on a region of the first surface 10a, to which the light guide portion 21 is connected. However, when the first layer 11 is formed on the entirety of the first surface 10a, the work of connecting the light guide portion 21 to the first surface 10a such that the light guide portion 21 is disposed on the first layer 11 can be facilitated.

In the embodiment, a reflection layer that reflects the excitation light L1 may be formed over the entirety of the side surface 21c of the light guide portion 21. The reflection layer may be, for example, a metal layer formed by evaporation or the like, or a reflection coating layer. When the reflection layer is formed, the excitation light L1 can be reliably reflected on the side surface 21c of the light guide portion 21. In addition, when the reflection layer is a metal plating layer, the cooling performance of the light guiding and cooling member 20 can be improved.

In the embodiment, similarly to the third modification example, the light guide portion 21 may be formed in a tapered shape that is inclined such that the diameter of the light guide portion 21 decreases as the light guide portion 21 approaches the first surface 10a of the laser gain medium 10. Alternatively, on the contrary, the light guide portion 21 may be formed in a tapered shape that is inclined such that the diameter of the light guide portion 21 increases as the light guide portion 21 approaches the first surface 10a of the laser gain medium 10. In the embodiment, a cooling member may be connected to the second surface 10b of the laser gain medium 10. In this case, the laser gain medium 10 can be cooled from both sides, and the laser gain medium 10 can be efficiently cooled. The cooling member may be, for example, the light guiding and cooling member 20. In the embodiment, a side surface of the laser gain medium 10 may be heated. In this case, the thermal lens effect can be further reduced.

### Reference Signs List

1: laser amplification device, 2, 2A, 2B, 2C, 2D, 2E: laser medium unit, 10, 10A, 10B, 10C: laser gain medium, 10a: first surface, 10b: second surface, 11: first layer, 12: second layer, 20, 20A, 20B, 20C, 20D, 20E: light guiding and cooling member, 21, 21A, 21B, 21C, 21D, 21E: light guide portion, 21c: side surface, 22: cooling portion, 30: light source, 100: laser oscillation device, 110: partial reflection mirror (partial reflection unit), L1: excitation light, L2: laser light, R1: first region, R2: second region.

## Claims

1. A laser medium unit comprising:
a laser gain medium that is formed in a plate shape, has a first surface and a second surface opposite to the first surface, and generates emission light upon irradiation with excitation light from the first surface; and
a light guiding and cooling member connected to the first surface to guide the excitation light toward the first surface and to cool the laser gain medium,
wherein the first surface consists of a first region to which the light guiding and cooling member is thermally connected, and a second region other than the first region, and
an entirety of the second region is thermally isolated from the light guiding and cooling member.

2. The laser medium unit according to claim 1,
wherein the second region surrounds the first region.

3. The laser medium unit according to claim 1 or 2,
wherein when viewed in a direction perpendicular to the first surface, the first region has a shape that is line-symmetrical with respect to a straight line passing through a center of the first surface and that is point-symmetrical with respect to the center.

4. The laser medium unit according to any one of claims 1 to 3,
wherein the light guiding and cooling member includes a light guide portion connected to the first surface, and a cooling portion in contact with a side surface of the light guide portion.

5. The laser medium unit according to any one of claims 1 to 4,
wherein the light guiding and cooling member includes a light guide portion connected to the first surface, and
the light guide portion is configured such that when the excitation light is guided by the light guide portion, an intensity distribution of the excitation light in a direction parallel to the first surface is made uniform.

6. The laser medium unit according to any one of claims 1 to 5,
wherein the light guiding and cooling member includes a light guide portion connected to the first surface, and
a length of the light guide portion in a direction perpendicular to the first surface is longer than a length of the light guide portion in a direction parallel to the first surface.

7. The laser medium unit according to any one of claims 1 to 6, further comprising:
a light source that outputs the excitation light,
wherein the light source is a semiconductor laser having a plurality of light-emitting regions.

8. The laser medium unit according to any one of claims 1 to 7,
wherein a layer that transmits the excitation light while reflecting the emission light is formed on the first surface.

9. The laser medium unit according to any one of claims 1 to 7,
wherein a layer that transmits the excitation light while reflecting the emission light is formed on an incidence surface of the excitation light on the light guiding and cooling member.

10. The laser medium unit according to any one of claims 1 to 9,
wherein a layer that reflects the excitation light while transmitting the emission light is formed on the second surface.

11. The laser medium unit according to any one of claims 1 to 10,
wherein a plurality of each of the laser gain mediums and the light guiding and cooling members are provided, and
the plurality of laser gain mediums and the plurality of light guiding and cooling members are alternately connected to each other.

12. The laser medium unit according to any one of claims 1 to 11, further comprising:
a plurality of light sources, each of which outputs the excitation light, and
wherein the excitation light from each of the plurality of light sources is incident on the light guiding and cooling member.

13. The laser medium unit according to any one of claims 1 to 12,
wherein the light guiding and cooling member includes a light guide portion connected to the first surface, and
an outer peripheral surface of the light guide portion is formed in a tapered shape inclined with respect to a direction perpendicular to the first surface.

14. The laser medium unit according to any one of claims 1 to 13, further comprising:
a housing having a vacuum internal space, and
wherein the laser gain medium and the light guiding and cooling member are disposed in the internal space.

15. The laser medium unit according to any one of claims 1 to 14,
wherein the light guiding and cooling member includes a light guide portion connected to the first surface, and
the light guide portion is formed in a cylindrical shape, and defines a flow path, through which a refrigerant flows, inside.

16. A laser amplification device comprising:
the laser medium unit according to any one of claims 1 to 15,
wherein laser light is incident on the first surface or the second surface, and the laser light amplified in the laser gain medium by the emission light is output.

17. The laser amplification device according to claim 16,
wherein the laser light is incident on the second surface, and the amplified laser light is output from the second surface.

18. A laser amplification device comprising:
a plurality of the laser medium units according to any one of claims 1 to 15,
wherein in each of the plurality of laser medium units, laser light is incident on the second surface, and the laser light amplified in the laser gain medium by the emission light exits from the second surface,
the plurality of laser medium units include a first laser medium unit and a second laser medium unit, and
the laser light that has exited from the first laser medium unit is amplified in the second laser medium unit.

19. A laser oscillation device comprising:
the laser medium unit according to any one of claims 1 to 15; and
a partial reflection unit that is disposed on an optical path of the emission light output from the laser gain medium, and laser-oscillates the emission light.
